Europäisches Patentamt

European Patent Office

Office européen des brevets

(19)

(11) Veröffentlichungsnummer: **0 006 109**
**B1**

(12) ## EUROPÄISCHE PATENTSCHRIFT

(45) Veröffentlichungstag der Patentschrift:
**05.08.81**

(51) Int. Cl.³: **G 03 B 27/54**

(21) Anmeldenummer: **79100896.4**

(22) Anmeldetag: **24.03.79**

(54) **Beleuchtungseinrichtung mit einem Lichtleitschacht für fotografische Vergrösserungsgeräte mit in der Vorlagenebene drehbarer Bildbühne.**

(30) Priorität: **26.05.78 IT 483278**

(43) Veröffentlichungstag der Anmeldung:
**09.01.80 Patentblatt 80/1**

(45) Bekanntmachung des Hinweises auf die Patenterteilung:
**05.08.81 Patentblatt 81/31**

(84) Benannte Vertragsstaaten:
**DE FR GB**

(56) Entgegenhaltungen:
**DE-A-2 427 389**
**US-A-2 255 319**
**US-A-3 831 021**

(73) Patentinhaber: **Durst AG Fabrik Fototechnischer Apparate, Gerbergasse 58, I-39100 Bozen (IT)**

(72) Erfinder: **Pramstraller, Wilhelm, Köstlanstrasse 55, I-39042 Brixen (IT)**

(74) Vertreter: **Kapfinger, Wolfgang, c/o DURST AG Fabrik Fototechnischer Apparate Köstlanstrasse 12, I-39042 Brixen (BZ) (IT)**

ACTORUM AG.

Beleuchtungseinrichtung mit einem Lichtleitschacht für fotografische Vergrösserungsgeräte mit in der Vorlagenebene drehbarer Bildbühne

Die Erfindung betrifft eine Beleuchtungseinrichtung mit einem Lichtleitschacht für ein fotografisches Vergrösserungsgerät mit in der Vorlagenebene drehbarer Bildbühne.

Bei bekannten Vergrösserungsgeräten wird zwischen zwei verschiedenen Beleuchtungssystemen unterschieden, wobei bei einem das von einer Lichtquelle abgestrahlte Licht durch ein Kondensorsystem gebündelt und als sogenanntes gerichtetes Licht auf die zu beleuchtende Bildvorlage gelenkt und beim zweiten dieses Licht in einem zumeist keine Linsen enthaltenden Lichtleitsystem in einem Lichtleitschacht mit reflektierenden Innenwänden mehrfach reflektiert und als diffuses Licht auf die Bildvorlage geleitet wird.

Wenn an deren Verwendung in einem Vergrösserungsgerät mit in der Vorlagenebene drehbarer Bildbühne gedacht wird, sind beide Beleuchtungssysteme, was die erreichbare Lichtausbeute anbelangt, mangelhaft, da nur ein Teil des Lichtquerschnitts für die Durchleuchtung der im Normalfall rechteckigen oder quadratischen Bildvorlagen nutzbar ist. Beim Kondensorbeleuchtungssystem ist der Beleuchtungsquerschnitt in der Regel rund, weshalb dieser für den vorgesehenen Durchleuchtungszweck beschnitten werden muss. Die die zu projizierenden Bildvorlagen aufnehmende Bildbühne hat dazu eine dem jeweiligen Bildformat angepasste Maske, die das Licht der nicht verwendbaren Querschnittsbereiche zurückhält. Zur Vermeidung von Streulicht sind derartige Masken zumeist schwarz eingefärbt. Soll die Bildvorlage bei jeder Drehlage der Bildbühne gleichmässig durchleuchtet sein, muss auch bei einem einen Lichtleitschacht verwendenden diffusen Beleuchtungssystem der Beleuchtungsquerschnitt in der der Bildvorlage gegenüberliegenden Lichtaustrittsebene des Schachtes grösser als die Fläche der zugeordneten Bildvorlage sein. Da derartige Lichtleitschächte aus konstruktiven Gründen zumeist rechteckigen oder quadratischen Querschnitt aufweisen, muss deren Lichtaustrittsfläche Seitenlängen aufweisen, die zumindest der Diagonale des zugeordneten zu durchleuchtenden Bildformats entsprechen. Dies bedingt wiederum, dass der Lichtquerschnitt des Beleuchtungssystems durch eine Maske in der Bildbühne beschnitten werden muss. Gerade bei diffusen Beleuchtungssystemen hat es sich jedoch gezeigt, dass eine genaue Anpassung des Querschnitts der Lichtaustrittsseite des Lichtleitschachtes an das zu durchleuchtende Format sehr grosse Vorteile im Hinblick auf die Verkürzung der Belichtungszeiten beim fotografischen Kopieren erbringt. Zu diesem Zwecke werden auch für die meisten bekannten diffusen Beleuchtungssysteme dem zu durchleuchtenden Format im Querschnitt angepasste, austauschbare Lichtleitschächte angeboten.

Aufgabe der Erfindung ist es, bei einem Beleuchtungssystem der eingangs genannten Art eine Verbesserung der Lichtausbeute zu erreichen.

Die Aufgabe wird durch die im Anspruch 1 gekennzeichnete Erfindung gelöst.

Durch die erfindungsgemässe Lösung kann der Querschnitt des Lichtleitschachtes in optimaler Weise dem Format der zu projizierenden Bildvorlage angepasst werden, wobei die Drehbarkeit der Bildbühne mit allen damit verbundenen Vorteilen gewährleistet bleibt. Zudem ergibt sich der Vorteil, dass die erfindungsgemässe Beleuchtungseinrichtung auf einfache konstruktive Mittel zurückgreift, weshalb die Verbesserung der Lichtausbeute keine wesentliche Verteuerung des Gerätes mit sich bringt.

Zweckmässige Ausführungsformen bzw. Weiterbildungen der Erfindung ergeben sich aus den Unteransprüchen.

Im folgenden wird die Erfindung an einem Ausführungsbeispiel und anhand von Zeichnungen näher erläutert. In den Zeichnungen zeigen

Fig. 1 ein fotografisches Vergrösserungsgerät mit einer erfindungsgemässen Beleuchtungseinrichtung, teilweise im Schnitt und in den Teilen, die für das Verständnis der Erfindung unwesentlich sind, stark schematisiert;

Fig. 2 ein vergrössertes Detail aus Fig. 1 mit der Darstellung eines Lichtleitschachtes und einer Bildbühne;

Fig. 3 das Detail aus Fig. 2 mit geöffneter Bildbühne;

Fig. 4 einen Schnitt entlang der Linie A–A von Fig. 2 mit der stark vereinfachten Darstellung eines Lichtleitschachtes und einer Bildbühne in einer Drehlage;

Fig. 5 dieselbe Schnittdarstellung von Fig. 2 für eine gegenüber dieser geänderten Drehlage des Lichtleitschachtes und der Bildbühne.

Ein fotografisches Vergrösserungsgerät weist ein Projektionsbrett 1, eine daran durch eine Schraubverbindung 2 befestigte senkrechte Säule 3 und einen entlang dieser verstellbaren Vergrösserungskopf 4 auf, der eine Beleuchtungseinrichtung 5, eine eine Bildvorlage 6 aufnehmende Bildbühne 7 und ein Projektionsobjektiv 8 aufnimmt. Dieses ist an einem Objektivträger 9 befestigt, welcher entlang einer Stange 10 bewegbar ist. Zwischen einer die Beleuchtungseinrichtung 5 aufnehmenden Halterung 11 und dem Objektivträger 9 ist ein lichtdichter Balg 12 angebracht. Diese genannten Teile, sowie die verschiedenen Bewegungsmechanismen für den Vergrösserungskopf und den Objektivträger sind allgemein bekannt und deshalb nicht genauer dargestellt und beschrieben. Die Beleuchtungseinrichtung 5 enthält eine Lichtquelle 13, einen Reflektor 14 und einen aus drei Teilen 15, 16, 17 zusammengesetzten Lichtleitschacht mit innen reflektierenden Wänden, wobei den einzelnen Teilen beispielsweise je eine von drei Streuscheiben 18, 19, 20 zugeordnet ist. Zwischen der Lichtquelle 13 und dem ersten Teil 15 des Lichtleitschachtes sind beispielsweise drei Farbfilter 21, 22, 23 jeweils in einer der drei subtraktiven Grundfarben Gelb, Blau-Grün, Purpur in Richtung der Pfeile f in kontinuierlicher Weise in den Strahlengang über einen entsprechenden Bewegungsmechanismus einführbar. Ein solcher Mechanismus ist beispielsweise für das Farbfilter 23 in schematischer Weise dargestellt: Mit einem Einstellrad 24 ist eine Steuerkurve 25 verbunden, mit der ein abgewinkelter Hebel 26 über eine Übertragungsrolle 27 in Wirkverbindung steht. Bei Drehung des Einstellrades 24 um dessen Achse 24a wird durch die Wirkverbindung zwischen der Steuerkurve und dem abgewinkelten Hebel, an dem das Filter 23 befestigt ist, dessen vorgesehene Bewegung in Richtung der Pfeile f verursacht. Ein entsprechender, nicht dargestellter Bewegungsmechanismus ist auch für die beiden anderen Filter 21 und 22 vorgesehen.

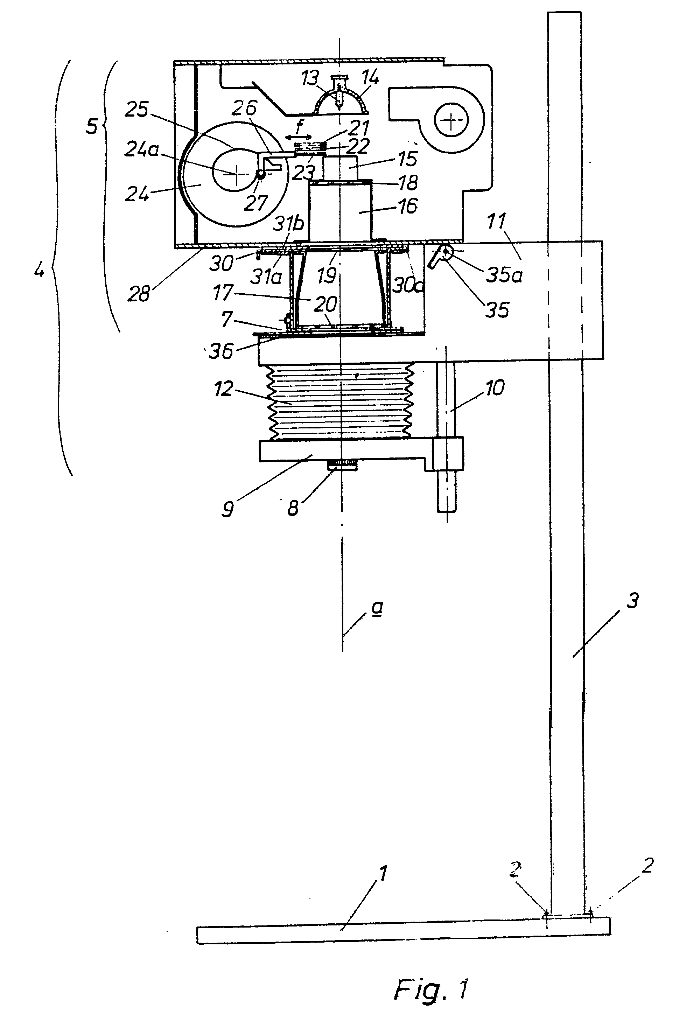

Unterhalb des Teiles 16 des Lichtleitschachtes ist eine eine kreisrunde Lichtdurchlassöffnung 29 aufweisende Platte 30 an Führungen 30a in die in Fig. 1 gezeigte Stellung einschieb- und somit mit dem Gehäuse 28 der Beleuchtungseinrichtung 5 verbindbar. An dieser Platte 30 ist der aus Stabilitätsgründen doppelwandig ausgeführte Teil 17 des Lichtleitschachtes drehbar gelagert. Zu diesem Zwecke sind die äusseren Wände 17a des Teiles 17 des Lichtleitschachtes an zwei eine Lichtdurchlassöffnung aufweisenden Platten 31a bzw. 31b befestigt, die die Platte 30 auf ihrer oberen bzw. unteren Seite an den Rändern der Lichtdurchlassöffnung 29 umgreifen. Dabei ist der Abstand d der Platten 31a und 31b voneinander etwas grösser als die Stärke der Platte 30, um eine einwandfreie Drehbewegung des Teiles 17 des Lichtleitschachtes zu gewährleisten. Die Lichtdurchlassöffnung 29 und der durch diese hindurchtretende Abschnitt des Teiles 17 des Lichtleitschachtes sind in ihren jeweiligen Abmessungen so aufeinander abgestimmt, dass die Drehachse während der Drehbewegung des Teiles 17 des Lichtleitschachtes nur ein geringes Spiel aufweist. Dessen innere Wände 17b sind innen reflektierend ausgeführt und in bekannter Weise an den äusseren Wänden 17a befestigt. An der Vorderwand des Teiles 17 des Lichtleitschachtes ist ein Zapfen 33 angebracht.

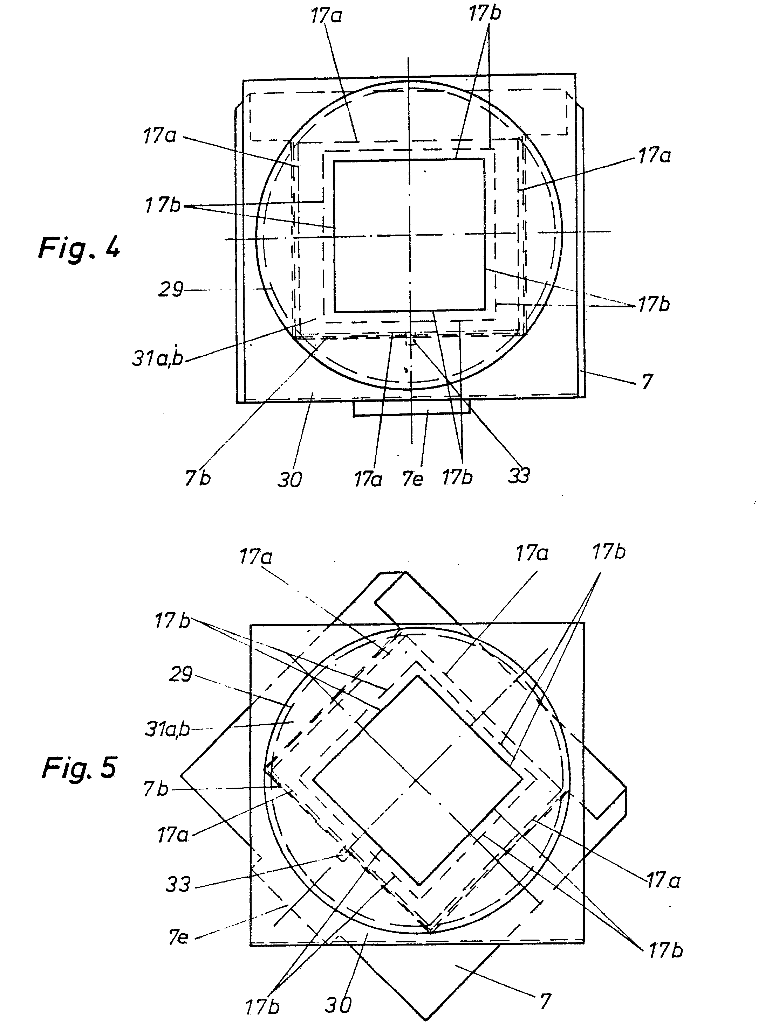

Die Bildbühne 7 besteht aus zwei beispielsweise durch ein Scharnier 7a zusammengehaltenen Teilen 7b und 7c, wovon der obere Teil 7b auf der von der Vorderseite des Vergrösserungsgerätes zugänglichen Seite L-förmig aufgebogen ist. Dieser aufgebogene Teil enthält eine Bohrung 7d, in die der Zapfen 33 eingreift, wenn sich die Bildbühne in der Projektionslage befindet. Der untere Teil 7c der Bildbühne weist Erhebungen 34 auf, die in eine in die Halterung 11 eingearbeitete, kreisrunde Ausnehmung 36 eingreifen und dadurch, dass sie mit diesen in Wirkverbindung treten, die untere Führung für die drehbare Bildbühne 7 darstellen. Wenn nun die Bildbühne 7 beispielsweise über einen mit deren unterem Teil 7c verbundenen Hebel 7e in einer zur optischen Achse a normalen Ebene gedreht wird, wird diese Drehbewegung über die zwischen der Bildbühne 7 und dem Teil 17 des Lichtleitschachtes über den Zapfen 33 bestehende Wirkverbindung auf den Teil 17 des Lichtleitschachtes übertragen. Fig. 4 zeigt die Bildbühne 7 und den Teil 17 des Lichtleitschachtes in einer Drehlage und Fig. 5 dieselben Elemente in einer um 45° gedrehten Lage.

Der dem Teil 17 vorgeschaltete Teil 16 des Lichtleitschachtes weist auf seiner Lichtaustrittsseite einen Querschnitt derart auf, dass dieser in jeder Drehlage des Teiles 17 im Querschnitt auf dessen Lichteintrittsseite enthalten ist. In der Darstellung von Fig. 1 ist der Querschnitt des Teiles 16 des Lichtleitschachtes beispielsweise kreisförmig. Bei rechteckigen oder quadratischen Querschnitten muss die Diagonale des Teiles 16 des Lichtleitschachtes geringer als die Seitenlängen des Querschnittes der Lichteintrittsseite des Teiles 17 sein. Bei der beschriebenen Zuordnung der Querschnitte wird die Lichtausbeute optimiert und gleichzeitig eine für praktische Bedürfnisse gleichmässige Ausleuchtung unmittelbar oberhalb der Bildbühne 7 unabhängig von deren Drehlage erhalten. Ist eines oder mehrere der Farbfilter 21, 22, 23 teilweise in den Strahlengang eingeschoben, wird bei jeder Filterstellung und bei jeder Drehlage der Bildbühne 7 eine für die praktischen Bedürfnisse ausreichende Lichtmischung erzielt. Die Dimensionierung der einzelnen Teile des Lichtleitschachtes hängt vom zu durchleuchtenden Vorlagenformat und von der verwendeten Lichtquelle ab. Dabei ist es denkbar, dass auch nur ein einziger, mit der Bildbühne drehbarer Lichtleitschacht vorhanden ist. Je nach Dimensionierung der Lichtleitwege können die Innenflächen des oder der Teile des Lichtleitschachtes spiegelnd oder diffus reflektierend ausgebildet sein. Zu einer günstigen Lichtverteilung in der Lichtaustrittsfläche des Beleuchtungssystems kann die Streuscheibe 20 in bekannter Weise eine über ihren Querschnitt unterschiedlich verteilte Streuwirkung ausüben. Der Lichtleitschacht oder dessen Teile müssen nicht eine quaderförmige Gestalt aufweisen, ihre Seitenwände können vielmehr in bekannter Weise verschiedene Biegungen oder Krümmungen aufweisen.

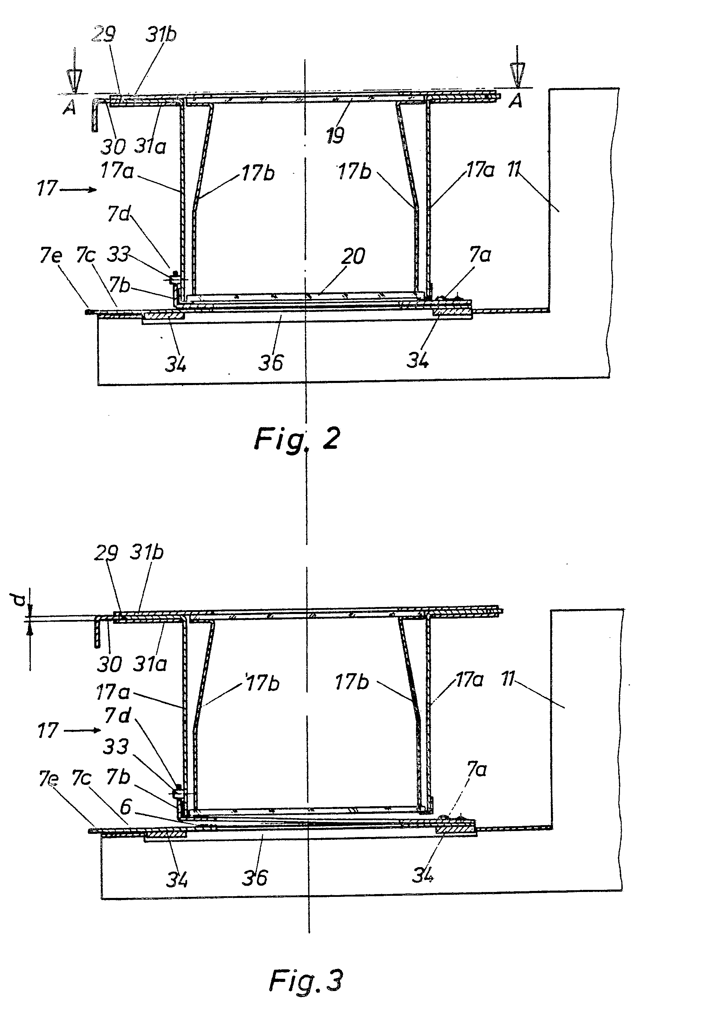

Um eine Entnahme der Bildbühne aus der beschriebenen Anordnung bzw. eine Bewegung der Bildvorlage 6 innerhalb der Bildbühne 7 zu ermöglichen, kann die Beleuchtungseinrichtung 5 in bekannter Weise, beispielsweise über einen am Träger 11 befestigten und auf das Gehäuse 28 einwirkenden und um eine exzentrische Drehachse 35a drehbaren Hebel 35 gegenüber der Halterung 11 und gegenüber der Bildbühnenebene verschoben, beispielsweise angehoben werden. Bei Anhebung des Beleuchtungssystems 5 wird auch der Teil 17 des Lichtleitschachtes angehoben und durch die Wirkverbindung Zapfen 33-Bohrung 7d, wie in Fig. 3 dargestellt, eine Öffnung der Bildbühne 7 bewirkt, in dem deren obere Hälfte 7b um das Scharnier 7a gedreht wird, während die untere Hälfte 7c der Bildbühne aufgrund der Gravitationskraft in der ursprünglichen Lage verbleibt. Somit ist durch Anheben des Beleuchtungssystems über den Hebel 35 ein bequemer Austausch der Bildvorlage in der Bildbühne unabhängig von deren Drehlage gesichert. Zur Schliessung der Bildbühne 7 wird die Beleuchtungseinrichtung 5 durch entsprechendes Einwirken auf den Hebel 35 wieder in die ursprüngliche Lage abgesenkt. Zur optimalen Beleuchtung verschiedener Bildformate ist der Teil 17 des Lichtleitschachtes gegen einen neuen Teil anderen Querschnitts austauschbar. Dazu wird die Beleuchtungseinrichtung über den Hebel 35 angehoben, die Bildbühne 7 aus ihrem Sitz entfernt und die Platte 30 mitsamt dem Teil 17 des Lichtleitschachtes aus den Führungen 30a herausgezogen und gegen eine neue Platte mit einem Teil eines Lichtleitschachtes unterschiedlichen Querschnitts ersetzt.

Die Erfindung ist nicht auf ein Ausführungsbeispiel beschränkt, bei dem Farbfilter in den Strahlengang einführbar sind, sondern bezieht sich auf alle Beleuchtungssysteme für diffuse Beleuchtung, die einen Lichtleitschacht aufweisen.

**Patentansprüche**

1. Beleuchtungseinrichtung mit einem Lichtleitschacht (15, 16, 17) für fotografische Vergrösserungsgeräte mit in der Vorlagenebene drehbarer Bildbühne (7), dadurch gekennzeichnet, dass der Lichtleitschacht oder ein lichtauslasseitig angeordneter Teil (17) des Lichtleitschachtes um eine normal zur Vorlagenebene liegende Achse (a) drehbar ist.

2. Beleuchtungseinrichtung nach Anspruch 1, dadurch gekennzeichnet, dass zwischen der Bildbühne (7) und dem Lichtleitschacht oder dem drehbaren Teil (17) des Lichtleitschachtes eine Wirkverbindung besteht.

3. Beleuchtungseinrichtung nach Anspruch 2, dadurch gekennzeichnet, dass eine Wand (17a) des Lichtleitschachtes oder des drehbaren Teils (17) des Lichtleitschachtes einen Zapfen (33) trägt, der in eine entsprechende Bohrung (7d) der Bildbühne (7) einführbar ist.

4. Beleuchtungseinrichtung nach einem der vorhergehenden Ansprüche, dadurch gekennzeichnet, dass der Lichtleitschacht oder dessen drehbarer Teil (17) an einer Platte (30) drehbar angebracht und diese an Führungen (30a) am Gehäuse (28) der Beleuchtungseinrichtung befestigbar ist.

5. Beleuchtungseinrichtung nach einem der vorhergehenden Ansprüche, dadurch gekennzeichnet, dass der untere Teil der Bildbühne (7) Erhebungen (34) aufweist, die in eine kreisrunde Ausnehmung (36) einer Bildbühnenhalterung (11) eingreifen.

6. Beleuchtungseinrichtung nach einem der vorhergehenden Ansprüche, dadurch gekennzeichnet, dass der drehbare Teil (17) des Lichtleitschachtes einen rechtwinkligen Querschnitt aufweist und mit einem weiteren Teil (16) des Lichtleitschachtes zusammenwirkt, dessen Querschnittsdiagonale oder -durchmesser geringer als eine Seitenlänge des Querschnitts des drehbaren Teils (17) des Lichtleitschachtes ist.

7. Beleuchtungseinrichtung nach einem der vorhergehenden Ansprüche, dadurch gekennzeichnet, dass der drehbare Teil (17) des Lichtleitschachtes gegen einen weiteren drehbaren Teil unterschiedlichen Querschnitts austauschbar ist.

8. Beleuchtungseinrichtung nach einem der vorhergehenden Ansprüche, dadurch gekennzeichnet, dass diese gegenüber der Bildbühnenebene verschiebbar ist.

9. Beleuchtungseinrichtung nach Anspruch 8, dadurch gekennzeichnet, dass bei deren Verschiebung der Lichtleitschacht oder dessen drehbarer Teil (17) mitbewegt wird.

10. Beleuchtungseinrichtung nach Anspruch 9, dadurch gekennzeichnet, das bei Verschiebung des Lichtleitschachtes oder dessen drehbaren Teils (17) die Bildbühne (7) geöffnet oder geschlossen wird.

**Patent Claims**

1. Illuminating device having a light guide shaft (15, 16, 17) for photographic enlargement apparatus having an image stage (7) that can be rotated in the plane of the original, characterised in that the light guide shaft or a part (17) of the light guide shaft arranged on the light outlet side can be rotated about an axis (a) lying normal to the plane of the original.

2. Illuminating device according to claim 1, chartacterised in that there is an operative connection between the image stage (7) and the light guide shaft or the rotatable part (17) of the light guide shaft.

3. Illuminating device according to claim 2, characterised in that one wall (17a) of the light guide shaft or of the rotatable part (17) of the light guide shaft carries a peg (33) which can be inserted into a corresponding bore (7d) in the image stage (7).

4. Illuminating device according to one of the preceding claims, characterised in that the light guide shaft or its rotatable part (17) is rotatably mounted on a plate (30) and the latter can be fastened to guides (30a) on the housing (28) of the illuminating device.

5. Illuminating device according to one of the preceding claims, characterised in that the lower part of the image stage (7) has projections (34) which engage a circular recess (36) in an image stage mounting (11).

6. Illuminating device according to one of the preceding claims, characterised in that the rotatable part (17) of the light guide shaft has a rectangular cross-section and co-operates with another part (16) of the light guide shaft, of which the cross-sectional diagonal or diameter is less than the length of a side of the cross-section of the ro-

tatable part (17) of the light guide shaft.

7. Illuminating device according to one of the preceding claims, characterised in that the rotatable part (17) of the light guide shaft can be exchanged for another rotatable part of a different cross-section.

8. Illuminating device according to one of the preceding claims, characterised in that it is movable relative to the plane of the image stage.

9. Illuminating device according to claim 8, characterised in that when it is moved, the light guide shaft or the rotatable part (17) thereof is moved with it.

10. Illuminating device according to claim 9, chracterised in that on moving the light guide shaft or the rotatable part (17) thereof, the image stage (7) is opened or closed.

**Revendications**

1. Dispositif d'éclairage avec cheminée guide-lumière (15, 16, 17) pour agrandisseurs photographiques avec plateforme d'image (7) pouvant tourner dans le plan de l'original, caractérisé par le fait que la cheminée guide-lumière ou une partie (17) de la cheminée guide-lumière, disposée du côté de la sortie de lumière, peut tourner autour d'un axe (a) placé normalement au plan de l'original.

2. Dispositif d'éclairage selon la revendication 1, caractérisé par le fait qu'entre la plateforme d'image (7) et la cheminée guide-lumière ou la partie tournante (17) de la cheminée guide-lumière, il existe une interaction.

3. Dispositif d'éclairage selon la revendication 2, caractérisé par le fait qu'une paroi (17a) de la cheminée guide-lumière ou de la partie tournante (17) de la cheminée guide-lumière porte un tenon (33) qui peut s'introduire dans une perforation correspondante (7d) de la plateforme d'image (7).

4. Dispositif d'éclairage selon l'une des revendications précédentes, caractérisé par le fait que la cheminée guide-lumière ou sa partie tournante (17) est disposée de manière à pouvoir tourner sur une plaque (30) et que celle-ci peut être fixé, sur des guides (30a), au boîtier (28) du dispositif d'éclairage.

5. Dispositif d'éclairage selon l'une des revendications précédentes, caractérisé par le fait que la partie inférieure de la plateforme d'image (7) présente des saillies (34) qui s'engagent dans un évidement circulaire (36) d'une monture de plateforme d'image (11).

6. Dispositif d'éclairage selon l'une des revendications précédentes, caractérisé par le fait que la partie tournante (17) de la cheminée guide-lumière présente une section rectangulaire et coopère avec une autre partie (16) de la cheminée guide-lumière dont la diagonale ou le diamètre de la section est inférieur à une longueur de côté de la section de la partie tournante (17) de la cheminée guide-lumière.

7. Dispositif d'éclairage selon l'une des revendications précédentes, caractérisé par le fait que la partie tournante (17) de la cheminée guide-lumière peut être remplacée par une autre partie tournante de section différente.

8. Dispositif d'éclairage selon l'une des revendications précédentes, caractérisé par le fait que le dispositif peut coulisser relativement au plan de la plateforme d'image.

9. Dispositif d'éclairage selon la revendication 8, caractérisé par le fait que lors du coulissement du dispositif, la cheminée guide-lumière ou sa partie tournante (17) se déplace en même temps.

10. Dispositif d'éclairage selon la revendication 9, caractérisé par le fait que lors du coulissement de la cheminée guide-lumière ou de sa partie tournante (17), la plateforme d'image (7) s'ouvre ou se ferme.

*Fig. 1*

Fig. 2

Fig. 3

*Fig. 4*

17a

17b

17a

17a

17b

17b

29

31a,b

7

7b    30    17a  7e  17b    33

*Fig. 5*

17a    17a    17b

17b

29

31a,b

7b

17a

33

7e

17a

17b

17b    30    7